Europäisches Patentamt

European Patent Office

Office européen des brevets

(11) Numéro de publication: **0 263 011 B1**

(12)
# FASCICULE DE BREVET EUROPEEN

(45) Date de publication de fascicule du brevet:
**08.05.91**

(21) Numéro de dépôt: **87402058.9**

(22) Date de dépôt: **15.09.87**

(51) Int. Cl.⁵: **A61C 3/04**, B25H 3/04, A47G 1/21

(54) **Support d'outils de meulage et de fraisage pour dentisterie.**

(30) Priorité: **25.09.86 FR 8613391**

(43) Date de publication de la demande:
**06.04.88 Bulletin 88/14**

(45) Mention de la délivrance du brevet:
**08.05.91 Bulletin 91/19**

(84) Etats contractants désignés:
**AT BE CH DE ES GB GR IT LI LU NL SE**

(56) Documents cités:
**DE-C- 532 703
DE-C- 694 264
GB-A- 529 886
US-A- 2 775 275
US-A- 4 471 988**

(73) Titulaire: **Ollivier, Jean
"Le Plessis"
F-85290 Mortagne-sur-Sevre (Vendée)(FR)**

(72) Inventeur: **Ollivier, Jean
"Le Plessis"
F-85290 Mortagne-sur-Sevre (Vendée)(FR)**

(74) Mandataire: **Chevallier, Robert Marie Georges et al
Cabinet BOETTCHER 23, rue La Boétie
F-75008 Paris(FR)**

**Description**

L'invention a pour objet un support pour des outils utilisés en dentisterie, tels que des meules ou des fraises de petite taille. Bien que ce support soit bien adapté à cet emploi, il n'y est pas limité de manière absolue et il convient aussi à d'autres activités comme la chirurgie, la prothèse, dentaire ou autre, le modélisme, etc ..., où on emploie couramment de petits outils.

On connaît déjà en dentisterie des supports de petits outils qui comprennent plusieurs surfaces planes, horizontales, étagées, dans lesquelles sont percés des trous alignés et espacés. Ces trous sont dimensionnés pour recevoir librement la queue d'un outil. Ces supports ont deux inconvénients principaux. S'ils sont renversés, ou parfois seulement bousculés, tes outils s'échappent des trous et se répandent sur le sol. Du fait principalement de leur encombrement général et, parfois, de la nature de la matière dont ils sont composés, il n'est pas possible de les mettre dans un stérilisateur, ce qui oblige à en retirer les outils pour les stériliser et à remettre ces outils à leur place après l'opération de stérilisation.

Cet état de la technique est illustré par le document DE-C-694 264 dans lequel est décrit un emballage pour l'expédition de petits outils de dentisterie se composant d'une boîte assez profonde et d'un couvercle dans l'épaisseur duquel sont creusées des rainures transversales parallèles. Ces rainures partent d'un bord longitudinal du couvercle et s'arrêtent à peu près au milieu de la largeur de ce dernier. Dans chaque rainure sont placés des ressorts qui en réduisent élastiquement la largeur. A chaque rainure correspond un support d'outils qui y introduit par coulissement et qui y est retenu par le serrage des ressorts. Chaque support a, dans le sens des rainures, une fente dans laquelle sont tenues les parties extrêmes inférieures de plusieurs outils disposés côte à côte, parallélement entre eux et perpendiculairement au support. Quand le couvercle ferme la boîte, les outils sont suspendus dans celle-ci, en-dessous du couvercle. Quand le couvercle est posé à l'envers, sur la boîte ou sur une surface plane horizontale quelconque, il joue le rôle d'un support des outils qui sont alors dressés verticalement et qui peuvent être prélevés un à un.

Ce support qui sert en même temps d'emballage pour expédition est relativement coûteux et volumineux; de plus, du fait de son volume et de sa composition, il ne peut pas être mis dans un stérilisateur des outils.

Le but principal de l'invention est d'apporter un support pour outils de dentisterie et analogues, de réalisation particulièrement économique, avec lequel les outils ne peuvent se répandre même quand le support est renversé, et qui supporte le passage dans un stérilisateur avec les outils qu'il porte.

Un but secondaire de l'invention est de parvenir à un support tel que défini ci-dessus utilisable non seulement pour porter les outils mais aussi pour servir d'élément d'emballage pour leur expédition.

Un support conforme à l'invention comprend d'une part une base ayant des moyens inférieurs d'appui et une face supérieure à fente à largeur déterminée ouverte à une extrémité, dans laquelle les moyens inférieurs d'appui et ta face supérieure sont séparés par au moins une partie transversale faisant apparaître un espace situé directement sous la fente, d'autre part au moins un étui ayant un corps allongé muni de lames étastiques pour le maintien d'outils et ayant deux faces principales longitudinales opposées, et deux faces secondaires, une supérieure et l'autre inférieure en position d'utilisation, l'une au moins de ses deux faces principales opposées présentant une dépression telle que la largeur du corps au niveau de cette dépression est inférieure à la largeur déterminée de la fente , lesdites lames élastiques de maintien d' outils comprenant au moins une paire de lames étastiques opposées, fixées chacune par une extrémité à la face secondaire supérieure et s'étendant perpendiculairement au corps, l'une au moins de ces lames étastiques étant profilée pour contenir en partie la queue d'un outil, caractérisé en ce que la base est réalisée en fil plié pour présenter deux parties longitudinales parallèles et espacées servant de moyens inférieurs d'appui ayant chacune à une extrémité un pli à 90°, chacun desdits pli à 90° est suivi de la partie transversale inclinée vers le haut et se rapprochant de l'autre et étant suivie chacune d'un pli à 90° auquel succède d'une part une première partie centrale surélevée et d'autre part une seconde partie centrale surélevée, ces deux parties centrales surélevées étant parallèles et espacées de la distance déterminée pour définir ta fente et constituer la face supérieure.

Dans un mode, de réalisation de l'invention, chacune des deux lames étastiques de l'étui ou de chaque étui a un pli longitudinal lui donnant un profil en section droite en V sur une partie au moins de sa longueur, les concavités des deux lames étastiques de chaque paire étant tournées l'une vers l'autre, pour contenir entre elles la queue d'un outil.

De préférence, il existe le long de la rainure sur ses deux bords opposés plusieurs lames élastiques appartenant à un même rang et séparées par un intervalle, certains au moins des intervalles qui séparent deux lames élastiques d'un même rang étant occupés par une lamelle indépendante.

Avantageusement, les lamelles indépendantes sont des lamelles élastiques ayant un coude transversal vers l'extérieur en saillie par rapport au rang correspondant des lames élastiques.

Selon un perfectionnement du support de l' invention, il comprend en plus un couvercle creux de protection des outils tenus entre les lames élastiques, ainsi que des lames elles-mêmes, ce couvercle ayant une largeur intérieure entre deux parois latérales principales opposées qui est inférieure à la distance existante entre les coudes de deux lamelles élastiques opposées en sens transversal au corps et une profondeur supérieure à la longueur desdites lamelles élastiques.

D'autres caractéristiques de l'invention et ses avantages ressortiront à la description données ci-dessous d' un exemple préféré de réalisation de l'invention en se reportant aux dessins annexés dans lesquels :

- les figures 1,2 et 3 sont respectivement des vues en élévation, de dessus et de bout d'un support conforme à l'invention, sauf que l'étui a été omis sur la figure 2 pour mieux laisser voir la fente,
- les figures 4 et 5 sont respectivement des vues en élévation et de dessus à plus grande échelle de l'étui qui fait partie du support de la figure 1,
- les figures 6 et 7 sont respectivement des vues en coupe selon VI-VI et VII-VII de la figure 1, la figure 7 montrant aussi un couvercle qui fait partie du support perfectionné de l'invention.

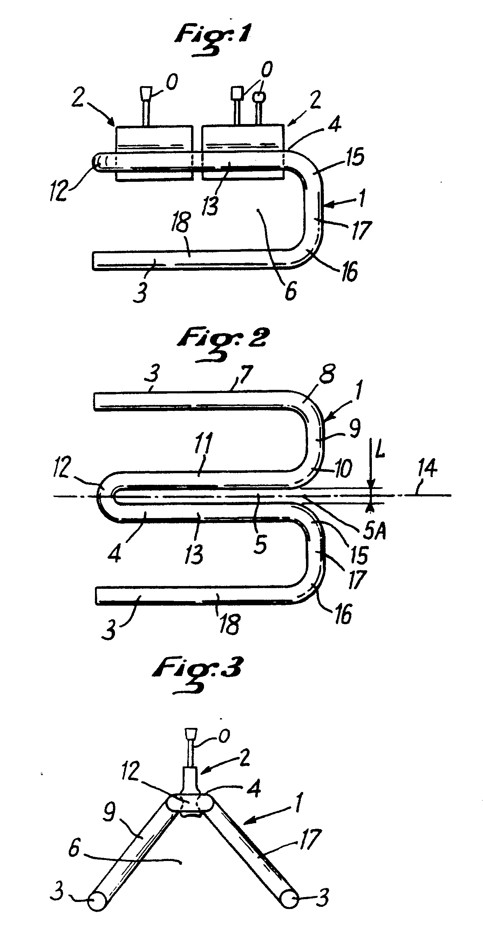

Le support de l'invention comprend une base s et au moins un étui 2; dans l'exemple décrit ici le support comprend deux étuis 2 visibles sur la figure 1.

La base 1 possède des moyens inférieurs 3 d'appui sur une surface plane et une face supérieure 4 dans laquelle est creusée une fente 5 de largeur déterminée L, ouverte à une extrémité 5A et fermée à l'extrémité opposée. Immédiatement sous la fente 3 il existe un volume vide 6 qui a une profondeur lui permettant de recevoir une partie de l'étui 2; ce dernier sera décrit plus loin en détail.

La base 1 est réalisée en matière qui supporte d'être placée dans un appareil de stérilisation d'usage courant en dentisterie; elle est, de préférence, en métal, et, avantageusement, comme le montrent les figures 1 à 3, en fil plié. A partir d'un tronçon de fil métallique rond ayant un diamètre de 4 mm par exemple, après une première partie extrême longitudinale 7, il existe un premier pli 8 à 90 et après une première partie transversale et inclinée vers le haut 9, un deuxième pli 10 à 90 à un niveau supérieur à celui de la première partie extrême longitudinale 7; on obtient ainsi une première partie centrale surélevée 11 dont le sommet fait partie de la face supérieure 4. On donne à cette partie centrale surélevée 11 une longueur à peu près égale à celle de la première partie extrême longitudinale 7 à laquelle elle est parallèle. A son extrémité, elle a un pli 12 à 180 qui fait apparaître une seconde partie centrale surélevée 13 située au même niveau que la première partie centrale surélevée 11 à laquelle elle est parallèle, à la distance L, et avec laquelle elle limite la fente 5 décrite plus haut. Ensuite, symétriquement par rapport à un plan général de symétrie 14, il existe des plis 15, 16 à 90 qui créent une seconde partie transversale et inclinée 17 et une seconde partie extrême longitudinale 18. Celle-ci est parallèle à la première partie extrême longitudinale 7; elle est au même niveau que cette dernière avec laquelle elle constitue les moyens inférieurs d'appui 3. Du fait de l'inclinaison des parties transversales inclinées 9,17, les parties extrêmes longitudinales 7,18 des moyens inférieurs d'appui 3 sont écartées et confèrent une bonne stabilité au support en faisant apparaître le volume vide 6. Une base 1 ainsi réalisée est économique, légère, facile à tenir propre et elle supporte toutes opérations de stérilisation.

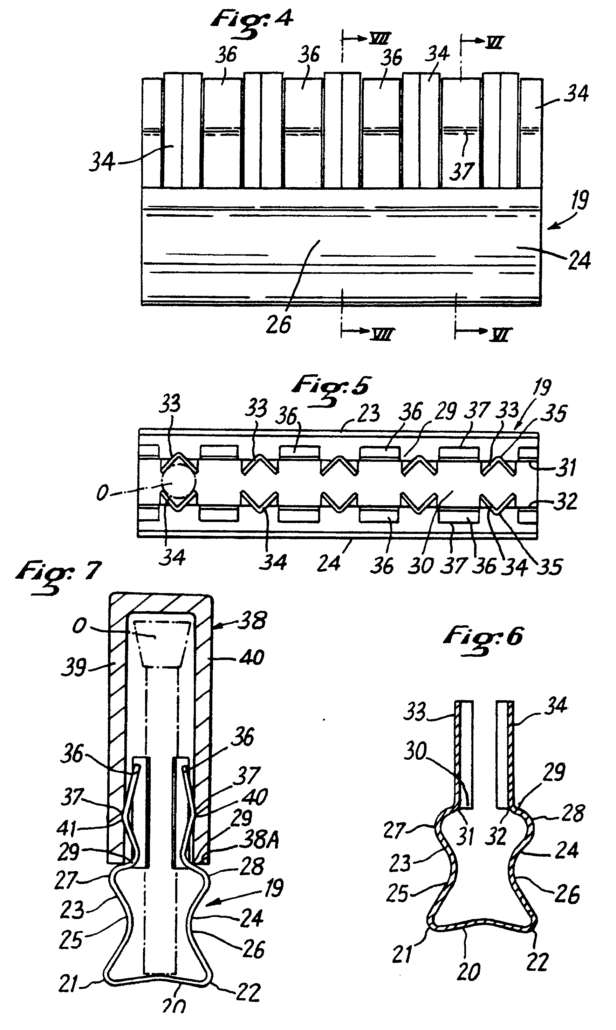

L'étui 2 qui fait partie du support est réalisé aussi en matière qui supporte la stérilisation : il est de préférence en métal et, avantageusement, comme le montrent les figures 4 à 6, en tôle métallique mince pliée et mise en forme comme on le décrira maintenant.

L'étui 2 a un corps allongé 19 qui comprend une face secondaire inférieure 20 limitée par deux plis longitudinaux à 90° 21, 22 qui font apparaître deux faces principales longitudinales opposées 23,24. Ces dernières sont verticales dans l'ensemble, en position d'utilisation, et elles ont chacune une dépression 25,26 s'étendant longitudinalement. Ces dépressions 25,26 sont telles que, à leur niveau, le corps 19 de l'étui a une largeur au plus égale à la largeur L de la fente 5 de la base 1. Ainsi il est possible d'enfiler un ou plusieurs étuis 2 dans la fente 5 comme on peut le voir sur les figures 1 et 3.

Les deux faces principales 23,24 sont limitées à leur partie supérieure par deux plis longitudinaux à 90 27, 28 qui font apparaître une face secondaire supérieure 29 mieux visible sur la figure 3. Cette face 29 est divisée en deux bandes longitudinales par une rainure centrale longitudinale 30 limitée par deux bords longitudinaux opposés 31,32. A partir de chacun de ces bords 31, 32, et par conséquent à partir de la face secondaire supérieure 29, s'élèvent des lames élastiques 33, 34, perpendiculairement au corps 19. Il existe donc deux rangs de lames élastiques 33, 34 et d'un rang à l'autre ces lames sont opposées deux à deux pour constituer des paires de lames. Dans un même rang les lames successives sont séparées les unes des autres et chacune d'elles a un pli longitudinal 35, à 90°, à partir de la face secondaire supérieure 20, qui lui donne une section droite à profil en V. Les deux lames élastiques 33, 34 opposées d'une même paire sont espacées comme il est nécessaire et leurs concavités sont tournées l'une vers l'autre puur qu'elles puissent contenir entre elles, élastiquement, une queue d'un outil 0,comme représenté en trait mixte sur la partie gauche de la figure 5. La queue de cet outil 0 passe par la rainure 30 et descend à l'intérieur du corps 19 jusqu'à sa rencontre avec le fond de ce dernier, ainsi qu'on l'a dessiné en trait mixte sur la figure 7. Des outils 0 ainsi supportés par les étuis 2, qui sont eux-mêmes supportés par la base 1, sont représentés sur les figures s et 3. Ils sont fortement en saillie au sommet des étuis 2 et ils peuvent être saisis facilement. Même en cas de renversement accidentel de la base 1, les outils sont retenus élastiquement entre les lames élastiques 33, 34 et ne s'échappent pas.

Selon un perfectionnement de l'invention, les lames élastiques 33 ou 34 de chaque rang sont espacées par un intervalle sensiblement égal à leur propre largeur et chaque intervalle est occupé par une lamelle élastique 36 indépendante des deux lames élastiques 33, ou 34, entre lesquelles elle se trouve. Chaque lamelle élastique 36 a une longueur égale à celle des lames élastiques 33, 34, à partir de chaque bord de la rainure 30; dans l'ensemble chaque lamelle 36 est perpendiculaire au corps 19 mais elle a, dans le milieu de sa longueur, un coude 37, vers l'extérieur, mieux visible sur la figure 7. De ce fait deux lamelles élastiques 36 opposées l'une à l'autre de part et d'autre de la rainure 30 ont ensemble deux coudes saillants 37 dirigés vers l'extérieur, si bien que les lamelles 36 sont en saillie, par leur coude 3,7, par rapport au rang correspondant des lames élastiques.

L'étui 2 décrit ci-dessus est réalisé en totalité dans une seule feuille métallique, par découpage et pliage. On obtient un ensemble en une seule pièce composé du corps 19 et des lames 33, 34 et lamelles 37. Ce mode de réalisation permet d'enfiler sur les lamelles élastiques 36 un couvercle 38 (figure 7) suffisamment profond pour qu'il contienne les outils 0, les lames élastiques 33,34 et les lamelles élastiques 37 jusqu'à venir se poser par son bord libre 38 A sur la face secondaire supérieure 29. Le couvercle 38 a une largeur intérieure entre deux parois principales latérales opposées 39, 40 qui est inférieure à la distance qui existe, en sens transversal au corps 19, entre les coudes 37 des lamelles élastiques 36 opposées. La compression élastique des lamelles 36 entre les parois 39,40 du couvercle 38 sert à retenir ce dernier sur le corps 19. En variante, on peut prévoir dans les parois 39, 40 des dépressions longitudinales 41 dimensionnées et disposées pour que la partie la plus saillante des coudes 37 s'y engage quand le couvercle 38 est enfilé sur les lamelles 36.

Pour stériliser les outils 0, il n'est pas nécessaire de les enlever de l'étui 2. Il suffit de tirer hors de la fente 5 le ou les étuis 2 et de les mettre directement dans un appareil de stérilisation avec les outils 0. Ensuite, on peut enfiler le ou les étuis 2 dans la fente 5 sans avoir à toucher les outils. Il est même possible de mettre la totalité du support, c'est-à-dire la base 1 et le ou les étuis 2 enfilés dans la fente 5, dans un appareil de stérilisation. Si on a stérilisé aussi, séparément, un ou plusieurs couvercles 38, on peut couvrir les outils 0 stérilisés à l'aide de ces couvercles, sans avoir à retirer les étuis 2 de la fente 5, jusqu'au moment où on désire les utiliser.

## Revendications

1. Support pour outils utilisables en dentisterie, ou analogues, comprenant : d'une part une base (1) ayant des moyens inférieurs d'appui (3) et une face supérieure (4) à fente (5) à largeur déterminée (L) ouverte à une extrémité (5A), dans laquelle les moyens inférieurs d'appui (3) et la face supérieure (4) sont séparés par au moins une partie transversale (9, 17) faisant apparaître un espace (6) situé directement sous la fente (5), d'autre part au moins un étui (2) ayant un corps allongé (19) muni de lames élastiques pour le maintien d'outils et ayant deux faces principales longitudinales opposées (23,24), et deux faces secondaires, une supérieure (29) et l'autre inférieure (20) en position d'utilisation, l'une au moins de ses deux faces principales opposées (23,24) présentant une dépression (25) telle que la largeur du corps (19) au niveau de cette dépression (25) est inférieure à la largeur déterminée (L) de la fente (5), lesdites lames élastiques de maintien d'outils comprenant au moins une paire de lames élastiques (33,34) opposées, fixées chacune par une extrémité à la face secondaire supérieure (29) et s'étendant perpendiculairement au corps (19), l'une au moins de ces lames élastiques (33, 40)) étant profilée pour contenir en partie la queue d'un outil (0), caractérisé en ce que la base (1) est réalisée en fil plié pour présenter deux parties longitudinales (7, 18) parallèles et espacées servant de moyens inférieurs (3) d'appui ayant chacune à une extrémité un pli à 90° (8,16), chacun desdits plis à 90° (8, 16) est suivi de la partie transversale inclinée vers le haut (9, 17) et se rapprochant de l'autre et étant suivie chacune d'un pli à 90° (10, 15) auquel succède d'une part une première partie centrale surélevée (11) et d'autre part une seconde partie centrale surélevée (13), ces deux parties centrales surélevées (11, 13) étant parallèles et espacées de la distance déterminée (L) pour définir la fente (5) et constituer la face supérieure (4).

2. Support selon la revendication 1, caractérisé en ce que chacune des deux lames élastiques (33, 34) de l'étui (2) ou de chaque étui (2) a un pli longitudinal (35) lui donnant un profil en section droite en V sur une partie au moins de sa longueur, les concavités des deux lames élastiques (33,34) de chaque paire étant tournées l'une vers l'autre, pour contenir entre elles la queue d'un outil (0).

3. Support selon la revendication 2, caractérisé en ce qu'il existe le long de la rainure (30) sur ses deux bords opposés plusieurs lames élastiques appartenant à un même rang et séparées par un intervalle, certains au moins des intervalles qui séparent deux lames élastiques (33 ou 34) d'un même rang étant occupés par une lamelle indépendante (36).

4. Support selon la revendication 3, caractérisé en ce que les lamelles indépendantes (36) sont des lamelles élastiques ayant un coude transversal (37) vers l'extérieur en saillie par rapport au rang correspondant des lames élastiques (33, 34).

5. Support selon la revendication 4, caractérisé en ce qu' il comprend en plus un couvercle (38) creux de protection des outils (0) tenus entre tes lames élastiques (33, 34) , ainsi que des lames elles-mêmes, ce couvercle (38) ayant une largeur intérieure entre deux parois latérales principales opposées (39,40) qui est inférieure à la distance existante entre les coudes (37) de deux lamelles élastiques (36) opposées en sens transversal au corps (19) et une profondeur supérieure à la longueur desdites lamelles élastiques (36).

6. Support selon la revendication 1, caractérisé en ce que l'étui (2) ou chaque étui (2) est en feuille métallique mince pliée, avec le corps allongé (19) ayant une face secondaire inférieure (20) limitée par deux plis longitudinaux à 90° (21,22) suivis de deux faces principales longitudinales opposées (23,24) dans chacune desquelles il existe une dépression longitudinale (25,26) donnant à ce corps (19) une largeur au plus égale à la largeur (L) de la fente (5) de la base (1), ces deux faces principales longitudinales (25, 26) étant limitées aussi par deux plis longitudinaux à 90° (27, 28) suivis d'une face secondaire supérieure (29) divisée en deux bandes longitudinales par une rainure centrale longitudinale (30) ayant deux bords longitudinaux opposés (31, 32) à partir desquels s'élèvent les lames élastiques (33, 34).

7. Support selon la revendication 6, caractérisé en ce que le long desdits bords longitudinaux opposés (31,32) s'élèvent alternativement les lames élastiques (33,34) et les lamelles élastiques (37), en constituant un ensemble d'une seule pièce avec le corps allongé (19).

## Claims

1. A support for tools which can be used in dentistry, or the like, comprising: on the one hand a base (1) having lower support means (3) and an upper face (4) having a slot (5) of given width (L) which is open at one end (5A), in which the lower support means (3) and the upper face (4) are separated by at least one transverse portion (9, 17) providing a space (6) disposed directly beneath the slot (5), and on the other hand at least one holder (2) having an elongate body (19) provided with resilient strips for holding tools and having two opposed longitudinal main faces (23, 24) and two secondary faces, an upper secondary face (29) and the other lower secondary face (20), in the position of use, one at least of its two opposed main faces (23, 24) having a depression (25) such that the width of the body (19) at the location of said depression (25) is less than the given width (L) of the slot (5), said resilient tool-holding strips comprising at least one pair of opposed resilient strips (33, 34) which are each fixed by one end to the upper secondary face (29) and which extend perpendicularly to the body (19), one at least of said resilient strips (33, 40) being profiled to contain in part the shank of a tool (0), characterised in that the base (1) is made of wire which is bent to present two parallel spaced longitudinal portions (7, 18) serving as lower support means (3), each having at one end a 90° bend (8, 16), each of said 90° bends (8, 16) is followed by the transverse portion (9, 17) which is inclined upwardly and which extends towards the other and each being followed by a 90° bend (10, 15) which is followed on the one hand by a first central raised portion (11) and on the other hand a second central raised portion (13), said two central raised portions (11, 13) being parallel and spaced by the given distance (L) to define the slot (5) and constitute the upper face (4).

2. A support according to claim 1 characterised in that each of the two resilient strips (33, 34) of the holder (2) or each holder (2) has a longitudinal bend (35) imparting thereto a profile of V-shaped cross-section over a part at least of its length, the concavities of the two resilient strips (33, 34) of each pair being turned towards each other to contain between them the shank of a tool (0).

3. A support according to claim 2 characterised in that disposed along the groove (30) on its two opposed edges are a plurality of resilient strips belonging to the same respective row and separated by a gap, some at least of the gaps which separate two resilient strips (33 or 34) of the same row being occupied by an independent strip portion (36).

4. A support according to claim 3 characterised in that the independent strip portions (36) are resilient strip portions having a transverse bend configuration (37) in an outward direction in projecting relationship with respect to the corresponding row of resilient strips (33, 34).

5. A support according to claim 4 characterised in that it further comprises a hollow cover (38) for protecting the tools (0) which are held between the resilient strips (33, 34), and the strips themselves, said cover (38) being of an internal width between two opposed main side walls (39, 40) which is less than the distance between the bend configurations (37) of two resilient strip portions (36) in opposite relationship in a transverse direction relative to the body (19), and a depth which is greater than the length of said resilient strip portions (36).

6. A support according to claim 1 characterised in that the holder (2) or each holder (2) is of thin bent metal sheet with the elongate body (19) having a lower secondary face (20) defined by two longitudinal 90° bends (21, 22) followed by two opposed longitudinal main faces (23, 24), in each of which there is a longitudinal depression (25, 26) imparting to said body (19) a width which is at most equal to the width (L) of the slot (5) of the base (1), said two longitudinal main faces (25, 26) also being defined by two 90° bends (27, 28) followed by an upper secondary face (29) which is divided into two longitudinal band portions by a longitudinal central groove (30) having two opposed longitudinal edges (31, 32) from which the resilient strips (33, 34) extend upwardly.

7. A support according to claim 6 characterised in that the resilient strips (33, 34) and the resilient strip portions (37) extend upwardly alternately along said opposed longitudinal edges (31, 32), constituting an assembly in one piece with the elongate body (19).

**Ansprüche**

1. Halter für zahnärztliche oder analoge Werkzeuge, mit: einerseits einem Fuß (1) mit einer unteren Auflageeinrichtung (3) und einer Oberseite (4) mit einem Spalt (5) vorgegebener Länge (L), der an einem Ende (5A) offen ist, und im Fuß die untere Auflageeinrichtung (3) und die Oberseite (4) durch mindestens einen Querteil (9, 17) getrennt werden, der einen unmittelbar unter dem Spalt (5) liegenden Raum (6) bildet, andererseits mindestens einem Behälter (2) mit einem länglichen Körper (19), der mit federnden Blechen zur Halterung der Werkzeuge ausgestattet ist und zwei in Längsrichtung einander gegenüberliegende Hauptseiten (23, 24) aufweist, sowie zwei sekundäre Seiten, eine in Gebrauchslage obere Seite (29) und eine untere Seite (20), mindestens eine dieser beiden sich gegenüberliegenden Hauptseiten (23, 24) eine Vertiefung (25) aufweist, so daß die Breite des Körpers (19) in Höhe dieser Vertiefung (25) kleiner als die vorgegebene Breite (L) des Spalts (5) ist, die federnden Bleche zur Halterung der Werkzeuge mindestens ein Paar einander gegenüberliegender federnder Bleche (33, 34) umfassen, und jedes an einem Ende an der oberen sekundären Seite (29) befestigt ist und sich senkrecht zum Körper (19) erstreckt, und mindestens eines dieser federnden Bleche (33, 40) ein Profil aufweist, um teilweise den Schaft eines Werkzeugs (0) aufzunehmen,

dadurch **gekennzeichnet, daß**
der Fuß (1) als gebogener Draht ausgebildet ist und zwei in Längsrichtung verlaufende, parallele und im Abstand voneinander liegende Abschnitte (7, 18) bildet, die als untere Auflageeinrichtung (3) dienen und von denen jeder ein um 90° umgebogenes Ende (8, 16) hat, sich an jede der 90°-Biegungen (8, 16) der nach oben geneigte Querteil (9, 17) anschließt und sich dem anderen Querteil annähert und sich an ihn jeweils eine 90°-Biegung (10, 15) anschließt, auf den einerseits ein erster zentraler, erhöhter Abschnitt (11) anschließt, und andererseits ein zweiter zentraler, erhöhter Abschnitt (13), diese beiden zentralen, erhöhten Abschnitte (11, 13) parallel zueinander verlaufen und den vorgegebenen Abstand (L) voneinander aufweisen, um den Spalt (5) zu bilden und die Oberseite (4) darzustellen.

2. Halter nach Anspruch 1,
   dadurch **gekennzeichnet,** daß
   jedes der beiden federnden Bleche (33, 34) des Behälters (2) oder eines jeden Behälters (2) eine in Längsrichtung verlaufende Krümmung (35) hat, die ihm im Schnitt auf mindestens einem Teil seiner Länge ein V-förmiges Profil verleiht, und die Konkavitäten der beiden elastischen Bleche (33, 34) eines jeden Paars einander zugewandt sind, um zwischen sich den Schaft eines Werkzeugs (0) aufzunehmen.

3. Halter nach Anspruch 2,
   dadurch **gekennzeichnet,** daß
   längs der Rinne (30) auf den beiden sich gegenüberliegenden Kanten mehrere federnde Bleche vorhanden sind, die einer gleichen Reihe zugehören und durch einen Zwischenraum getrennt sind, und mindestens bestimmte dieser Zwischenräume, die zwei federnde Bleche (33 oder 34) einer gleichen Reihe voneinander trennen, durch eine unabhängige Lamelle (36) besetzt sind.

4. Halter nach Anspruch 3,
   dadurch **gekennzeichnet,** daß
   die unabhängigen Lamellen (36) zwei federnde Lamellen sind, die ein quer nach außen verlaufendes Knie (37) bilden, das gegenüber der zugeordneten Reihe der federnden Bleche (33, 34) vorsteht.

5. Halter nach Anspruch 4,
   dadurch **gekennzeichnet,** daß
   er ferner einen hohlen Schutzdeckel (38) für die Werkzeuge (0) umfaßt, die zwischen den federnden Blechen (33, 34) gehalten werden, sowie für die Bleche selbst, und dieser Deckel (38) zwischen den beiden einander gegenüberliegenden Hauptseitenwänden (39, 40) eine lichte Weite hat, die kleiner als der Abstand zwischen den Knien (37) der beiden federnden Lamellen (36) ist, die sich in Querrichtung des Körpers (19) gegenüberliegen, und eine Tiefe, die größer ist als die Länge der federnden Lamellen (36).

6. Halter nach Anspruch 1,
   dadurch **gekennzeichnet,** daß
   der Behälter (2) oder jeder Behälter (2) ein dünnes gebogenes Metallblech ist, und der längliche Körper (19) eine sekundäre untere Seite (20) hat, die durch zwei in Längsrichtung verlaufende 90°-Biegungen (21, 22) begrenzt wird, an die sich zwei einander gegenüberliegende in Längsrichtung verlaufende Hauptseiten (23, 24) anschließen, in jeder von welchen eine in Längsrichtung verlaufende Vertiefung (25, 26) vorliegt, die dem Körper (19) eine Breite erteilt, die höchstens der Breite (L) des Spalts (5) des Fußes (1) gleichkommt, diese beiden Hauptlängsseiten (25, 26) ferner durch zwei in Längsrichtung verlaufende 90°-Biegungen (27, 28) begrenzt werden, an die sich eine sekundäre Oberseite (29) anschließt, die in zwei Längsstreifen mittels einer zentralen Längsrinne (30) unterteilt ist, die zwei einander gegenüberliegende Längskangen (31, 32) hat, von denen ausgehend sich die federnden Bleche (33, 34) nach oben erstrecken.

7. Halter nach Anspruch 6,
   dadurch **gekennzeichnet,** daß
   längs der einander gegenüberliegenden Längskanten (31, 32) sich abwechselnd die federnden Bleche (33, 34) und die federnden Lamellen (37) nach oben erstrecken und mit dem länglichen Körper (19) eine aus einem einzigen Teil bestehende Anordnung bilden.

*Fig:1*

*Fig:2*

*Fig:3*

*Fig: 4*

*Fig: 5*

*Fig: 7*

*Fig: 6*